# EUROPEAN PATENT SPECIFICATION

(11) **EP 0 862 360 B1**
(45) Date of publication and mention of the grant of the patent: **12.03.2003**
(21) Application number: 97930896.2
(22) Date of filing: 21.07.1997
(51) Int. Cl.: A01K 1/12

(54) **AN IMPLEMENT FOR AUTOMATICALLY MILKING ANIMALS**
VORRICHTUNG ZUM AUTOMATISCHEN MELKEN VON TIEREN
APPAREIL POUR LA TRAITE AUTOMATIQUE D'ANIMAUX

(30) Priority: 01.08.1996 EP 96202174
(43) Date of publication of application: 09.09.1998
(60) Divisional application: 02079537.3
(73) Proprietor: MAASLAND N.V., 3155 PD Maasland (NL)
(72) Inventor: FRANSEN, René, NL-3135 ZD Vlaardingen (NL)
(74) Representative: Corten, Maurice Jean F.M.
(86) International application number: PCT/NL97/00432
(87) International publication number: WO 98/005201

(56) References cited:
- EP-A- 0 313 109
- EP-A- 0 519 544
- EP-A- 0 647 390

## Description

The present invention relates to an implement for automatically milking animals, such as cows, according to the preamble of claim 1.

Such an implement is known from the European patent application EP-A-0647390. In this known implement the guard means are constituted by a removable cover plate which is slideable towards the teat cups and which, when the teat cups are not connected to the teats, covers the apertures of the teat cups.

It is an object of the invention to provide an alternative implement for automatically milking animals of the sort as defined above. Therefore the implement comprises the features of the characterizing part of claim 1.

The housing of a teat cup is preferably hinge-connected to the supporting element. Said supporting element is then capable of constituting at the same time the guard means for at least the open upper sides of the teat cups when the latter are in the position of rest.

In a first embodiment, the housing of a teat cup is provided with a carrying shoe for the teat cup, which carrying shoe is hinge-connected to said housing. In this embodiment, an operating cylinder may be disposed between the supporting element at one side and the housing of a teat cup and the carrying shoe for the teat cup at the other side. The housing may further be provided with a stop for the carrying shoe for the teat cups, which carrying shoe is disposed in this housing, while furthermore there is provided a coupling mechanism for adjusting the teat cup, by means of the operating cylinder, from the inoperative position into the operative position, in which the upper side of the teat cup is no longer guarded, and subsequently moving the teat cup upwards.

In a second embodiment, there is provided a carrier that is shiftable in a housing, which carrier is adapted to carry a teat cup. In this embodiment, an operating cylinder may be disposed between the supporting element and the carrier that is shiftable in a relevant housing. The housing may further be provided with a stop for the carrier that is shiftable therein, in order that, when the carrier has been shifted against said stop by means of a relevant operating cylinder, the relevant teat cup is subsequently moved upwards.

In both embodiments, by means of the relevant operating cylinders it can be achieved that, when a teat cup is connected to the relevant teat, the teat cup is released from the robot arm. Nevertheless, the teat cup can remain connected to the robot arm by means of a flexible element, such as a cord, cable or string, while in the housing of a teat cup there may be provided a further operating cylinder for pulling the teat cup back against the robot arm by means of said flexible element.

Additionally, it is possible to pass the milk hose connected to a teat cup over the aforementioned further operating cylinder and therebehind through the housing of the teat cup. Upon withdrawing a teat cup against the robot arm, the milk hose can be moved rearwards in the relevant housing, so that the risk of kinking of the milk hose is avoided.

In accordance with an other embodiment of the invention, a detector for determining the position of the teats of an animal to be milked may be provided on the robot arm, preferably on the supporting element. This detector may comprise two cameras, which are fixedly arranged, though at different angles, or a pivotable camera. In both cases it will be possible to determine accurately the position of the teats in a horizontal plane by means of picture analysis. As the implement according to the invention can bo operative 24 hours a day, it is desirable to produce the detector so that it includes at least one infrared camera.

The invention further relates to a method of automatically milking animals, such as cows, by means of a milking robot including a robot arm which is adapted to carry teat cups, characterized in that a teat cup is adjusted from an inoperative position, in which at least the open upper side of the teat cup is guarded by a robot arm portion, into the operative position, in which the upper side of the teat cup is no longer guarded, and is subsequently moved upwards for the purpose of connecting the teat cup to a relevant teat of the animal to be milked. The upward movement of the teat cup can then be realized by moving the housing of this teat cup upwards in the robot arm. As soon as a teat cup is connected to the relevant teat, the housing of this teat cup can be moved downwards in the robot arm, while the teat cup remains connected to said housing only by a flexible element, such as a cord, cable or string. When the housing of the teat cup has been moved downwards in the robot arm, it is possible, at least in the first embodiment, to adjust the carrying shoe of the teat cup into the position which it takes in the working condition. When subsequently, after the relevant udder quarter has almost been milked out, the teat cup has to be disconnected and to be pulled against the relevant carrying shoe by means of the flexible element, the teat cup can be adjusted into the inoperative position.

For a better understanding of the invention, reference will now be made to the accompanying drawings, in which:
Figure 1 shows a milking robot including a robot arm, in which the construction according to the invention is applied;
Figure 2 shows a side view of this milking robot;
Figure 3 shows an other type of milking robot having a robot arm, in which the construction according to the invention is applied;
Figure 4 shows a cross-section in side view of the construction according to the invention;
Figure 5 shows a plan view of this construction, the supporting element being omitted;
Figure 6 shows a detail of this construction;
Figures 7 to 10 show the various positions which are taken by a housing and a teat cup during connection and during milking;
Figure 11 shows an other embodiment of the construction according to the invention, which embodiment can be applied in a milking robot according to Figures 1 to 3, and
Figures 12 and 13 show two positions possibly to be taken by a housing and a teat cup during the connection of the teat cup.

Corresponding parts in the drawings are designated by the same reference numerals.

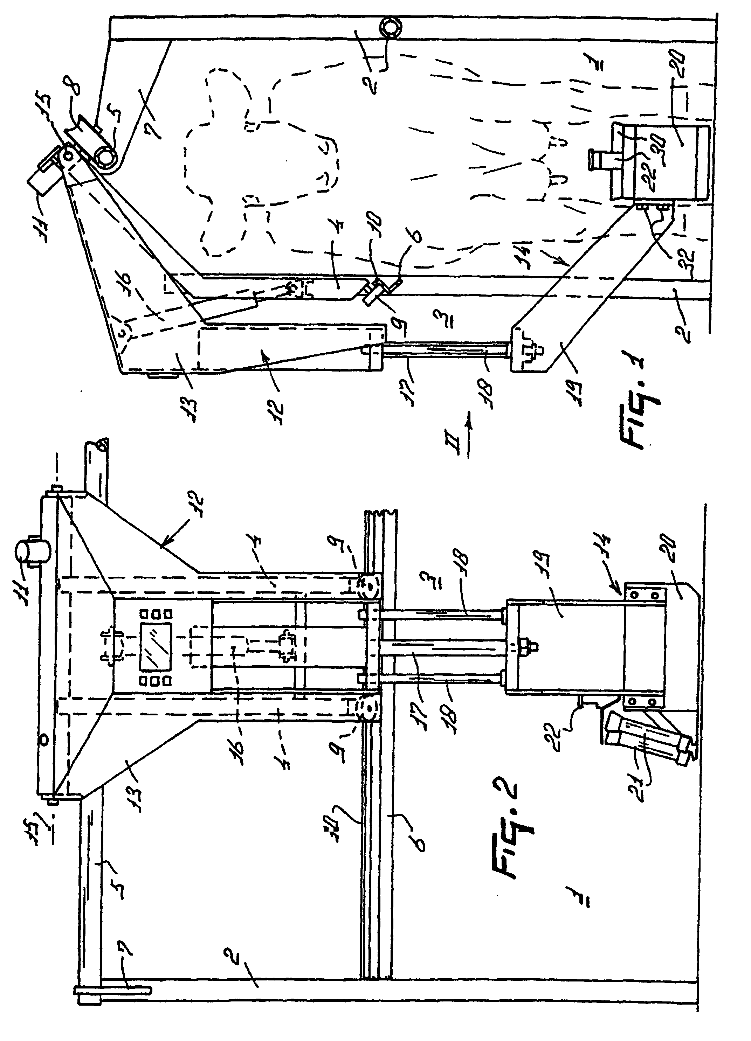

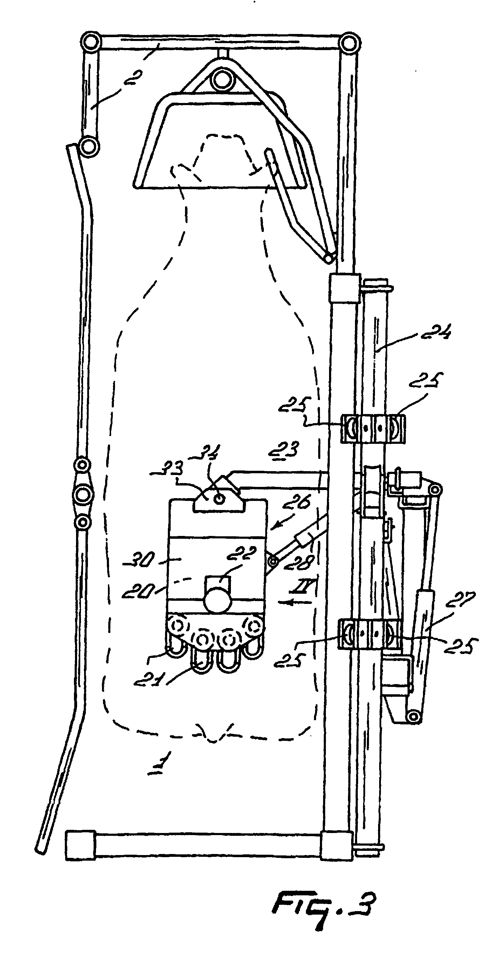

The milk box 1 shown in Figures 1 and 2 is surrounded in a customary manner by a fencing 2 and provided with a (non-shown) entrance and exit door. In the milk box and in the immediate vicinity thereof there is provided an automatic milking machine which, besides the usual milking equipment, includes a milking robot for automatically connecting teat cups to the teats of an animal to be milked which is present in the milk box, automatically milking said animal and automatically disconnecting the teat cups from the teats. The milking robot comprises a robot arm construction 3 movable in the longitudinal direction of the milk box 1. Said robot arm construction is provided with a supporting unit 4, which is movable along rails 5 and 6. In the embodiment shown, the rail 5 is tubular and disposed in the middle above the milk box 1 in the longitudinal direction thereof by means of supports 7 attached to the fencing 2. The rail 6 is disposed approximately half-way the height of the milk box at the longitudinal side of the fencing 2, i.e. at the side where the robot arm construction is located. The rail 6 is constituted by an angle section whose abutment face, over which the supporting unit 4 can be moved, is located at an angle of approximately 45° obliquely downwards and outwards relative to the milk box 1. Both at its upper side and its under side the supporting unit 4 is provided with rollers 8 and 9. Said rollers 8 and 9 are attached to the supporting unit 4 perpendicular to each other and at an angle of approximately 45° relative to a vertical plane in the longitudinal direction of the milk box, in such a manner that the supporting unit 4 is supported on the rail 5 by means of the rollers 8 and on the rail 6 by means of the rollers 9. In order to prevent the supporting unit 4 from being pushed from the rails 5 and 6, there are provided locking means, e.g. constituted by an upright edge 10 provided on the rail 6 or additional (non-shown) rollers, also attached to the supporting unit 4 and arranged diametrically opposite the rollers 8 relative to the rail 5, the rail 5 thus extending between the rollers. The supporting unit 4 is capable of being moved along the rails 5 and 6 by means of a motor 11.

The robot arm construction is furthermore provided with a sidewardly pivotable portion 12 comprising a carrier 13 extending substantially downwardly and a robot arm 14 attached thereto. The sidewardly pivotable portion 12 and consequently also the robot arm 14 are pivotable about a substantially horizontal pivotal axis 15, which is located at the upper side of the milk box or near thereto in the longitudinal direction thereof. The pivotal axis 15 and the centre line of the rail 5 are located in a substantially vertical plane.

The sideward pivotability of the portion 12 is achieved by means of an operating cylinder 16, which is disposed between said pivotable portion 12 and the supporting unit 4. As already mentioned, the sidewardly pivotable portion 12 comprises the carrier 13 and the robot arm 14. The robot arm 14 is connected movably in height to the carrier 13 by means of an operating cylinder 17. Parallel to this operating cylinder 17 there are provided one or more guide rods 18 for counteracting a rotating movement of the robot arm 14 about an axis in the longitudinal direction of the operating cylinder 17 relative to the carrier 13.

The robot arm 14 comprises a portion 19 extending obliquely downwards in the direction of the milk box and a portion 20 extending horizontally. The latter portion 20, which is adapted to act as a carrier for the teat cups 21, will be described in detail in what follows. On said portion 20 there is additionally arranged a detector 22 for determining the position of the teats.

In order to make it possible for an animal to enter the milk box 1 without damaging the milking robot, the sidewardly pivotable portion 12 of the robot arm construction is pivotable outwardly to such an extent that the robot arm 14 is located almost entirely outside the milk box 1. When an animal is present in the milk box and the teat cups 21 have to be connected, the robot arm construction 3 has first to be moved by means of the motor 11 in the longitudinal direction of the milk box to such an extent, i.e. into a position in which the robot arm 14 has pivoted entirely or almost entirely outside the milk box, that, by means of the operating cylinder 16, the robot arm 14 can be pivoted under the animal into a position in which the detector 22 is capable of determining the position of the teats. By subsequently operating the motor 11 and the operating cylinders 16 and 17, it will be possible to connect the teat cups 21 to the teats. When adjusting a teat cup into the correct position for connecting same to a relevant teat, the pivotability of the robot arm 14 about the pivotal axis 15 may be of great advantage when the teats of the animal are directed somewhat outwardly; a situation which occurs in particular when relatively much time has elapsed since the previous milking run.

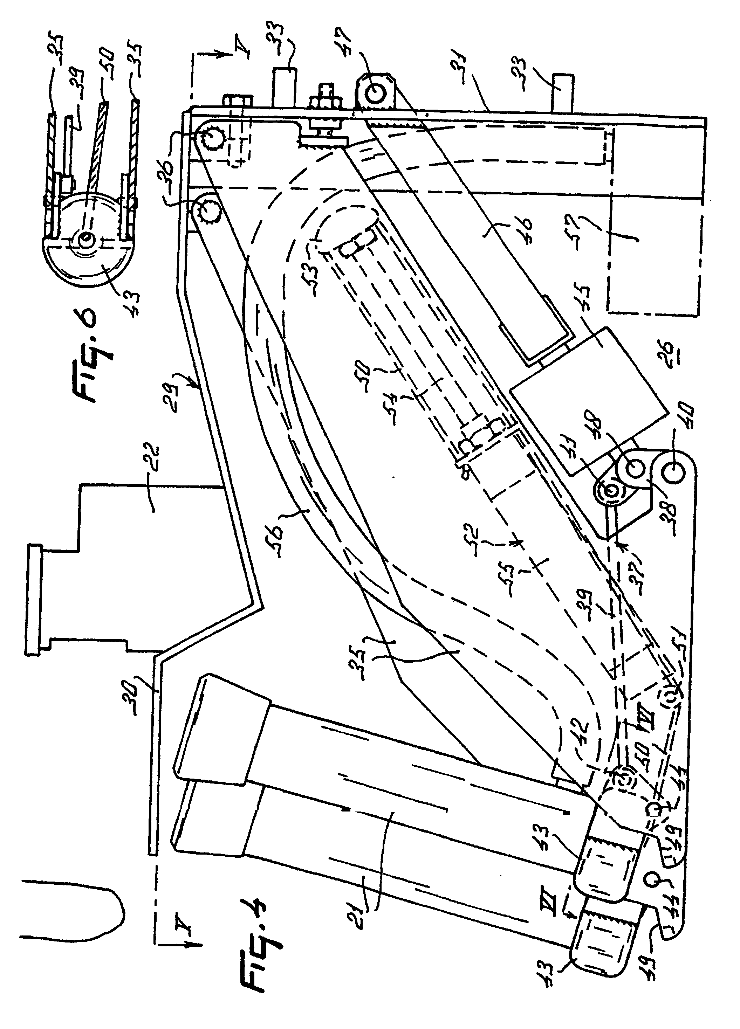

Figure 3 shows the milk box 1 including the fencing 2 and a type of robot arm construction 23 which differs from the one shown in Figures 1 and 2. Also in this case, the robot arm construction 33 is movable by means of a motor in the longitudinal direction of the milk box along a rail 24 whilst making use of rollers 25. The robot arm construction 23 is provided with a carrier, adjustable in height by means of a parallelogram construction and an operating cylinder, which carrier is movable along the aforementioned rail 24 by means of a carrier frame. At the lower side of said carrier there is attached a robot arm 26 including a portion 20 which is pivotable in a horizontal plane. By means of operating cylinders 27 and 28 said pivotable portion 20 is pivotable from a position outside the fencing 2 under the udder of an animal to be milked. The robot arm construction of Figure 3 has already been described in detail in EP-A-0 519 544; the description thereof is supposed to constitute part of the present description of the drawings. The horizontally extending portion 20 of the robot arm is equal in Figures 1 to 3 and will now be described with reference to Figures 4 to 10. Figures 11 to 13 show an alternative embodiment of said horizontally extending robot arm portion 20; this alternative embodiment can also be applied in the robot arm construction of Figures 1 and 2 as well as in that of Figure 3.

The horizontally extending robot arm portion 20 comprises a supporting element 29. This supporting element comprises at least an upper side 30 and a rear side 31. For the purpose of being incorporated in the robot arm of Figures 1 and 2, the supporting element is further provided with a side plate, said side plate being fixed to the downwardly extending robot arm portion 19 by means of bolts 32 (Figure 1). For the purpose of being incorporated in the robot arm of Figure 3, the supporting element is provided with two lugs 33, through which a vertical axis of rotation 34 can be inserted, by means of which axis of rotation the horizontally extending robot arm portion 20, under control of the operating cylinder 28, is movable in a horizontal plane under the udder of an animal to be milked.

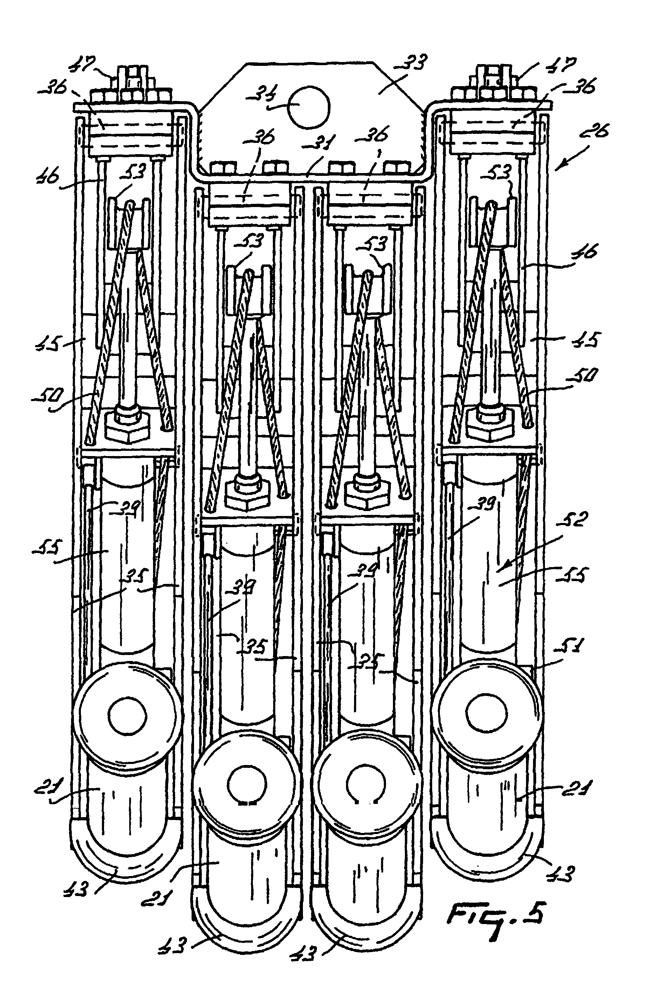

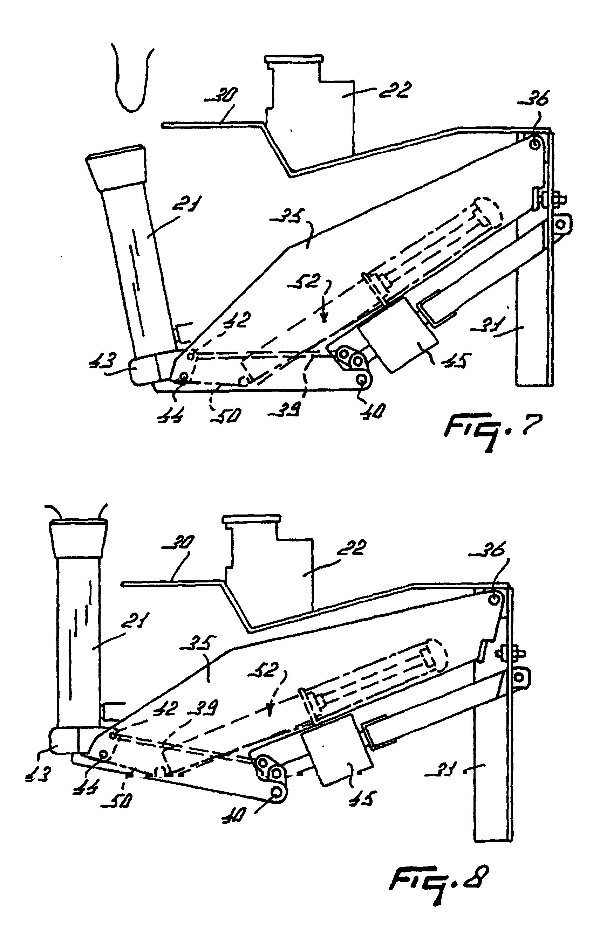

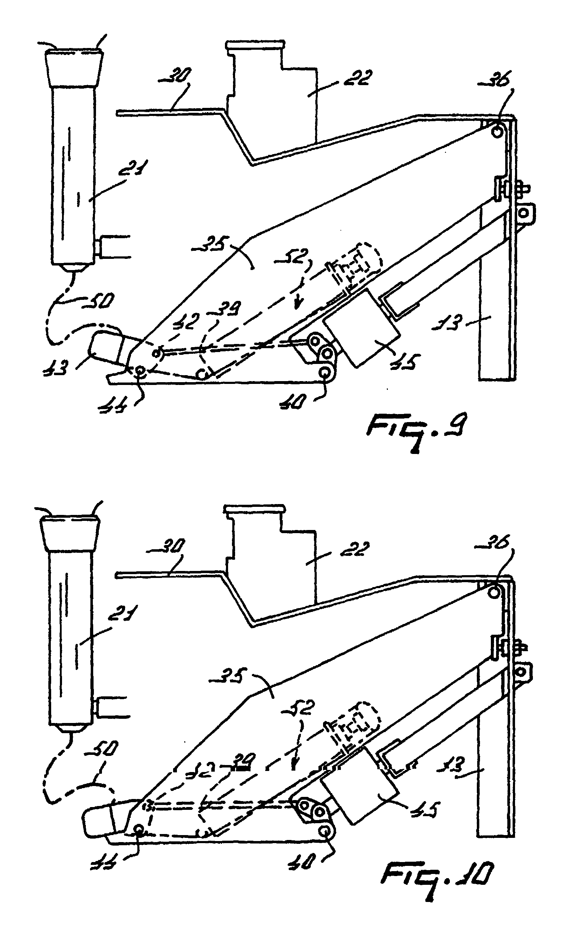

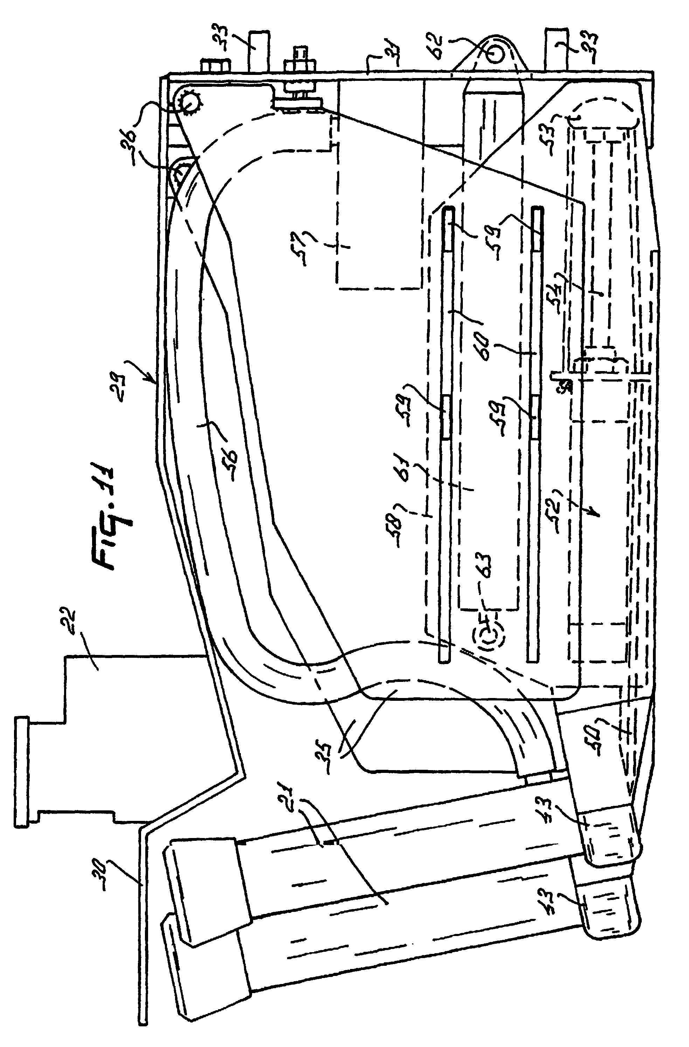

For each teat cup 21 there is provided a housing 35. Each housing is individually hinge-connected, rotatably about a hinge pin 36, to the supporting element 29 and consists of two plates between which a teat cup 21 is movably disposed. Each housing 35 is provided with a coupling mechanism 37 consisting of a bell crank 38 and a control lever 39. At one end, the bell crank 38 is hinge-connected, rotatably about a hinge pin 40, to a housing 35. At the other end, the bell crank is hinge-connected, rotatably about a hinge pin 41, to the control lever 39. From the bell crank 38 in the lower part of the housing 35 the control lever 39 extends forwardly and is hinge-connected at its front end, rotatably about a hinge pin 42, to a carrying shoe 43 for a teat cup 21. The carrying shoe 43 is further hinge-connected, rotatably about a hinge pin 44, to the housing 35. In the housing 35 there is provided an operating cylinder 45 which is connected, at one end, by means of a connecting element 46, rotatably about a hinge pin 47, to the supporting element 29, and, at the other end, rotatably about a hinge pin 48, to the bell crank 38, more in particular at a point between the two hinge pins 40 and 41. In the configuration of Figure 4, the operating cylinder 45 is pulled in, so that the housing 35 has taken its lowest position and the carrying shoe 43 has taken such a position that the teat cup carried thereby is supported by the carrying shoe 43 in an obliquely rearward direction. In this position, the position of rest, the open upper side of the teat cup 21 is guarded by the supporting element 29, in particular by the upper wall 30 thereof. When the operating cylinder 45 is energized, the bell crank 38, rotating about the hinge pin 40, is tilted forwardly relative to the housing 35, which movement is transferred via the control lever 39 to the carrying shoe, causing the latter to rotate about the hinge pin 44 until it gets locked against a stop 49 on the housing 35. The teat cup carried by the carrying shoe is thus adjusted into the operative position, i.e. the position in which the open upper side of the teat cup is no longer guarded by the supporting element. From this position, which is represented in Figure 7, the teat cup can be moved upwards. Such an upward movement is achieved by further energizing the operating cylinder 45, so that the housing, rotating about the hinge pin 26, is pushed upwards. This situation is represented in Figure 8. When, after this upward movement, the teat cup 21 is connected to a relevant teat, the housing 35 can be moved downwards, which is achieved by energizing the operating cylinder 45 in the other direction; see Figure 9 Although the teat cup 71, which remains connected to the teat because of the vacuum in the teat cup, is then released from the carrying shoe 43, there remains a connection between the teat cup 21 and the housing by means of a flexible element 50, such as a cord, cable or string.. Said flexible element 50 extends from the bottom side of a teat cup 21, through a carrying shoe 43 and under a roller 51, in the lower part of the housing 35 between the two side plates thereof, to an operating cylinder 52. During the downward pivoting movement of the housing, said operating cylinder must have been released, so that the flexible element, by means of which the teat cup 21 was previously pulled against the carrying shoe 43, does not hamper the teat cup when it is released from the carrying shoe. In order to avoid that the operating cylinder 52 is unnecessarily long, the flexible element 50 is passed over a guide element 53 at the end of the cylinder rod 54 and is subsequently fixed to the cylinder housing 55. Figure 9 shows the position of the operating cylinder 52 after the housing 35 has been moved downwards relative to the supporting element and the teat cup 21 has been released from the robot arm. After the milk flow from the relevant udder quarter has finished or almost finished, the teat cup has to be disconnected from the relevant teat. However, it has first to be ensured that the carrying shoe 43 is adjusted into the position in which it can easily receive the teat cup disconnected from the teat. To this end, the operating cylinder 45 is energized to such an extent that the carrying shoe takes the same position as it has in the operative position, i.e. in the position in which the teat cup can be moved upwards; this situation is represented in Figure 10. When afterwards the vacuum in the teat cup is removed and the operating cylinder 52 is energized, the falling teat cup is immediately pulled against the carrying shoe 43. By subsequently energizing again the operating cylinder 45, the teat cup can again be adjusted from the operative position into the inoperative position in which the open upper side of the teat cup is guarded. Figure 4 further shows how a milk hose 56 connected to a teat cup 21 extends through the housing 35. From the connection point on the teat cup 21 this milk hose extends above the operating cylinder 52 and then passes therebehind downwards to a connection point on the connecting block 57. The further milk lines connected to this connecting block are not shown in the figures. The relatively large loop in the milk hose enables to move the robot arm sufficiently far from a connected teat cup.

When upon withdrawing a teat cup to the robot arm the operating cylinder 52 is pulled out, the milk hose is moved at the same time upwards and rearwards by means of the guide element 53, so that the milk hose is always in a controlled position and there is no risk of kinking of the milk hose.

For the purpose of connecting a teat cup via an upward pivoting movement to a relevant teat, the position of the teat relative to the robot arm must be known. To that end, the detector 22 is provided. Although a rotating or pivotable laser detector may be used therefor, preference is given to a pivotable camera or two cameras which are fixedly arranged at different angles. In order to be able to use the detector during 24 hours, consequently also when it is dark in the milk box, these cameras should favourably be designed as infrared cameras. Upon using such cameras, by means of picture analysis the contours of a teat are established relative to a specific reference point, e.g. the middle of the image covered by the camera. For example, when a teat is located at a distance a on the right of the vertical diameter through said reference point and, after a pivoting movement of the camera through an angle ϕ at a distance b on the left of this vertical diameter, then for the distance r of the teat relative to the camera it applies that r.ϕ = a + b. The angular position β of the teat relative to the position of the camera in a horizontal plane can e.g. be determined according to the relation a=β.r. As a result of the fact that the height at which the robot arm is located upon determining the position of the teat can be known from the position of the operating cylinder 17, the position of a teat, expressed in cylinder coordinates, can permanently be kept up to date.

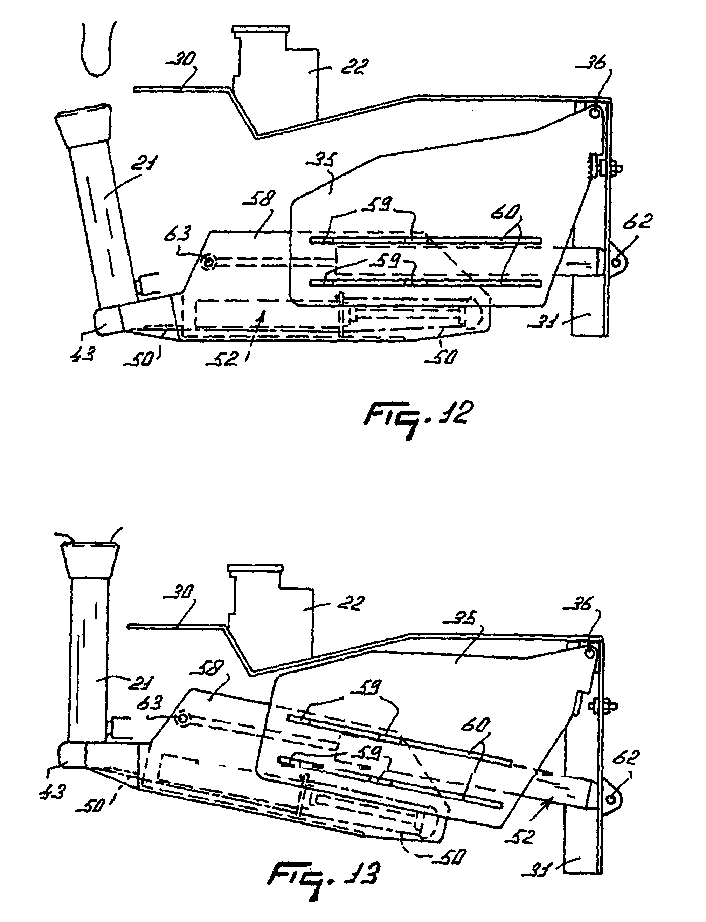

Figures 11 to 13 show an alternative embodiment for the horizontally extending robot arm portion 20. In Figure 11 the teat cups are in the position of rest, i.e. in the position in which the open uppor and of the teat cups is entirely guarded. Each of the teat cups 21 is supported itself by a carrying shoe 43. This carrying shoe 43 is rigidly mounted on a carrier 58 that is shiftable in a relevant housing 35. Said carrier 58 is provided with lugs 59, which are capable of being moved in slots 60 in the two side plates of a housing 35. The housing 35 is furthermore provided with an operating cylinder 61, which is hinge-connected, rotatably about hinge pins 62 and 63, between the supporting element 29 and a carrier 58. After this operating cylinder has been energized, the carrier 58 can be moved forwards from the housing 35 until the foremost lugs 59 touch the front edge 64 of the slots 60; these front edges 64 constitute a stop for the carrier 58 that is shiftable in a housing 35. After such a movement, a teat cup 21 is adjusted into the operative position, i.e. into the position in which it is capable of pivoting upwards. Said position is represented in Figure 12. When the operating cylinder 61 is energized further, the relevant housing, with the carrier 58 included therein in pulled out position, rotates upwards about the hinge pin 36, in the same manner as shown in the embodiment of Figures 4 to 10. This situation is represented in Figure 13. Like in the first embodiment, when after an upward movement a teat cup is connected to a teat, a housing, in this case with pulled out carrier, can be moved downwards by pulling the operating cylinder 61 in. Also in this situation the teat cup remains connected to the robot arm by means of a flexible element 50. Apart from the fact that the operating cylinder 52 for this flexible element is disposed in the carrier 58, in this embodiment the way in which a teat cup can be pulled against the relevant carrying shoe is equal to the one in the embodiment of Figures 4 to 10.

The milking robot is further provided with (non-shown) weight relieving means, with the aid of which the weight of the robot arm construction 3 is compensated in such a manner, that the robot arm construction 3 can be pivoted by hand by an operating person into a vertical plane, only very little force being required.

In a first, (non-shown) embodiment, the weight relieving means comprise a pressure control means with the aid of which, after activating the weight relieving means, the pressure in the operating cylinders 16 and 17 is adjusted in such a manner that the robot arm construction will take a floating position, whereas, when the robot arm construction is moved in the vertical plane, the floating position of the robot arm construction will be preserved in each position.

During movement of the robot arm construction in the vertical plane, the operating cylinders 16 and 17 move in conjunction therewith in an active manner in order to move the robot arm construction using as little force as possible. The pressure control means further comprises an adjustable valve by means of which the floating position of the robot arm construction can be adjusted, such as e.g. when the weight of the robot arm construction has changed in that e.g. alterations in the robot arm construction have been made.

In a second (non-shown) embodiment, the weight relieving means comprise a spring construction which is disposed between those portions of the robot arm construction and the other portions of the milking robot that are capable of being moved relative to each other in a vertical plane by means of the operating cylinders 16 and 17 of the robot arm construction. In a preferred embodiment in accordance with the invention, the spring construction includes springs whose pressure can be adjusted. The above-mentioned weight relieving means in a milking robot have the advantage that, when maintenance work has to be carried out on the robot arm construction, it is possible to keep the robot arm construction in a specific position without supporting same.

## Claims

1. An implement for automatically milking animals, such as cows, provided with a milking robot including a robot arm (14; 26) which is adapted to carry teat cups (21) and in the position of rest of said teat cups on the robot arm (14; 26), at least the open upper sides of the teat cups (21) are guarded by guard means, which robot arm (14; 26) comprises a supporting element (29), which is pivotable and/or shiftable under the udder of an animal, **characterized in that** the teat cups (21), each in an own housing (35), are movably disposed in the supporting element (29), said supporting element (29) constituting the guard means.

2. An implement as claimed in claim 1, **characterized in that** the housing (35) of a teat cup (21) is hinge-connected to the supporting element (29).

3. An implement as claimed in claim 1, 2 or 3, **characterized in that** the housing (35) of a teat cup (21) is provided with a carrying shoe (43) for the teat cup (21), which carrying shoe (43) is hinge-connected to said housing (35).

4. An implement as claimed in claim 4, **characterized in that** the carrying shoe (43) is provided with a conically extending recess and the teat cup (21) is provided at its bottom side with a corresponding conically extending protrusion.

5. An implement as claimed in any one of claims 1 to 5, **characterized in that** there is disposed an operating cylinder (16, 17; 27, 28; 45, 52, 61) between the supporting element (29) at one side and the housing (35) of a teat cup (21) and the carrying shoe (43) for the teat cup (21) at the other side.

6. An implement as claimed in claim 6, **characterized in that** the housing (35) of a teat cup (21) is provided with a stop (49) for a carrying shoe (43) for the teat cup (21), which carrying shoe (43) is disposed in this housing (35), while there is furthermore provided a coupling mechanism (37) for adjusting the teat cup (21), by means of the operating cylinder (16, 17; 27, 28; 45, 52, 61), from the inoperative position into the operative position, in which the upper side of the teat cup (21) is no longer guarded, and subsequently moving the teat cup (21) upwards.

7. An implement as claimed in claim 7, **characterized in that** the coupling mechanism (37) is constituted by a bell crank (38) which, at one end, is hinge-connected to the housing (35) of a teat cup (21) and, at the other end, is hinge-connected to a relevant carrying shoe (43) by means of a control lever (39), while the operating cylinder (16, 17; 27, 28; 45, 52, 61) between both ends is hinge-connected to the bell crank (38).

8. An implement as claimed in claim 1, 2 or 3, **characterized in that** there is provided a carrier (13; 58) that is shiftable in a housing (35), which carrier (13; 58) is adapted to carry a teat cup (21).

9. An implement as claimed in claim 9, **characterized in that** there is disposed an operating cylinder (16, 17; 27, 28; 45, 52, 61) between the supporting element (29) and the carrier (13; 58) that is shiftable in a relevant housing (35).

10. An implement as claimed in claim 10, **characterized in that** a housing (35) is provided with a stop (49) for the carrier (13; 58) that is shiftable therein in order that, when the carrier (13; 58) has been shifted against said stop (49) into the operative position by means of a relevant operating cylinder (16, 17; 27, 28; 45, 52, 61), the relevant teat cup (21) is subsequently moved upwards.

11. An implement as claimed in claim 7, 8 or 11, **characterized in that** there is provided a computer for controlling the operating cylinder (16, 17; 27, 28; 45, 52, 61) in such a manner that, at a movement of the cylinder in one direction, a teat cup (21) can be adjusted from the inoperative position into the operative position and subsequently be moved upwards in order that a teat cup (21) can be connected to a teat, whereas, when the teat cup (21) is connected to the relevant teat, a movement of the cylinder in the other direction ensures that the teat cup (21) is released from the robot arm (14; 26).

12. An implement as claimed in claim 12, **characterized in that**, when the milking robot has been adjusted into the position in which a teat cup (21) has been released from the robot arm (14; 26), the computer is capable of controlling the operating cylinder (16, 17; 27, 28; 45, 52, 61) in such a manner that the relevant carrying shoe (43), if not yet positioned in this way, is adjusted into the position which it takes in the working condition.

13. An implement as claimed in any one of claims 1 to 13, **characterized in that** the housing (35) of a teat cup (21) is provided with a further operating cylinder (16, 17; 27, 28; 45, 52, 61) which, under computer-control and by means of a flexible element (50), such as a cord, cable or string, is capable of pulling a teat cup (21), connected to a relevant teat and released from the robot arm (14; 26), back against the robot arm (14; 26).

14. An implement as claimed in claim 14, **characterized in that** the milk hose (56) connected to a teat cup (21) is passed over the further operating cylinder (16, 17; 27, 28; 45, 52, 61) and therebehind through the housing (35) of the teat cup (21).

15. An implement as claimed in claim 15, **characterized in that** there are provided means for moving the milk hose (56) rearwards in the relevant housing (35) upon withdrawing a teat cup (21) against the robot arm (14; 26).

16. An implement as claimed in claim 16, **characterized in that** these means are constituted by the further operating cylinder (16, 17; 27, 28; 45, 52, 61).

17. An implement as claimed in any one of the preceding claims, **characterized in that** there is provided a detector (22) on the robot arm (14; 26) for determining the position of the teats of an animal to be milked.

18. An implement as claimed in claim 18, **characterized in that** the detector (22) is disposed on a supporting element (29), which guards at least the open upper sides of the teat cups (21) when the latter are in the position of rest on the robot arm (14; 26).

19. An implement as claimed in claim 18 or 19, **characterized in that** the detector (22) comprises two cameras, which are fixedly arranged, though at different angles.

20. An implement as claimed in claim 18 or 19, **characterized in that** the detector (22) comprises a pivotable camera.

21. An implement as claimed in claim 18 or 19, **characterized in that** the detector (22) comprises at least one infrared camera.

22. A method of automatically milking animals, such as cows, provided with a milking robot including a robot arm (14; 26) which is adapted to carry teat cups (21), **characterized in that** a teat cup (21) is adjusted from an inoperative position, in which at least the open upper side of the teat cup (21) is guarded by a robot arm portion (19, 20), into the operative position, in which the upper side of the teat cup (21) is no longer guarded, and is subsequently moved upwards for the purpose of connecting the teat cup (21) to a relevant teat of the animal to be milked.

23. A method as claimed in claim 23, **characterized in that** the upward movement of the teat cup (21) is realised by moving the housing (35) of this teat cup (21) upwards in the robot arm (14; 26).

24. A method as claimed in claim 24, **characterized in that**, as soon as a teat cup (21) is connected to the relevant teat, the housing (35) of this teat cup (21) is moved downwards in the robot arm (14; 26), while the teat cup (21) remains connected to said housing (35) only by a flexible element (50), such as a cord, cable or string.

25. A method as claimed in claim 25, **characterized in that**, when the housing (35) of the teat cup (21) has been moved downwards in the robot arm (14; 26), the carrying shoe (43) of the teat cup (21) is adjusted into the position which it takes in the working condition.

26. A method as claimed in claim 26, **characterized in that**, when, after the relevant udder quarter has almost been milked out, the teat cup (21) is disconnected and has been pulled against the relevant carrying shoe (43) by means of the flexible element (50), the teat cup (21) can be adjusted into the inoperative position.

## Patentansprüche

1. Vorrichtung zum automatischen Melken von Tieren, wie z. B. Kühen, die mit einem Melkroboter mit einem Roboterarm (14; 26) versehen ist, der zum Tragen von Zitzenbechern (21) geeignet ist, wobei in der Ruhelage der Zitzenbecher an dem Roboterarm (14; 26) zumindest die offenen Oberseiten der Zitzenbecher (21) durch Schutzvorrichtungen geschützt sind, wobei der Roboterarm (14; 26) ein Stützelement (29) umfaßt, das unter das Euter eines Tieres schwenkbar und/oder schiebbar ist,
**dadurch gekennzeichnet, daß** die jeweils in einem eigenen Gehäuse (35) angeordneten Zitzenbecher (21) in dem Stützelement (29) beweglich angeordnet sind, wobei das Stützelement (29) die Schutzvorrichtung bildet.

2. Vorrichtung nach Anspruch 1,
**dadurch gekennzeichnet, daß** das Gehäuse (35) eines Zitzenbechers (21) mit dem Stützelement (29) gelenkig verbunden ist.

3. Vorrichtung nach Anspruch 1 oder 2,
**dadurch gekennzeichnet, daß** das Gehäuse (35) eines Zitzenbechers (21) mit einem Tragschuh (43) für den Zitzenbecher (21) versehen ist, wobei der Tragschuh (43) mit dem Gehäuse (35) gelenkig verbunden ist.

4. Vorrichtung nach Anspruch 3,
**dadurch gekennzeichnet, daß** der Tragschuh (43) mit einer konisch geformten Ausnehmung versehen ist und der Zitzenbecher (21) an seiner Unterseite einen entsprechenden, konisch geformten Vorsprung aufweist.

5. Vorrichtung nach einem der Ansprüche 1 bis 4,
**dadurch gekennzeichnet, daß** zwischen dem Stützelement (29) einerseits und dem Gehäuse (35) eines Zitzenbechers (21) und dem Tragschuh (43) für den Zitzenbecher (21) andererseits ein Arbeitszylinder (16, 17; 27, 28; 45, 52, 61) angeordnet ist.

6. Vorrichtung nach Anspruch 5,
**dadurch gekennzeichnet, daß** das Gehäuse (35) eines Zitzenbechers (21) mit einem Anschlag (49) für einen Tragschuh (43) des Zitzenbechers (21) versehen ist, wobei der Tragschuh (43) in diesem Gehäuse (35) angeordnet ist, wobei ferner eine Verbindungsvorrichtung (37) vorgesehen ist, um den Zitzenbecher (21) mit Hilfe des Arbeitszylinders (16, 17; 27, 28; 45, 52, 61) aus der Ruhelage in die Arbeitslage einzustellen, in der die Oberseite des Zitzenbechers (21) nicht mehr geschützt ist, und um anschließend den Zitzenbecher (21) nach oben zu bewegen.

7. Vorrichtung nach Anspruch 6,
**dadurch gekennzeichnet, daß** die Verbindungsvorrichtung (37) durch einen Kniehebel (38) gebildet ist, der am einen Ende mit dem Gehäuse (35) eines Zitzenbechers (21) gelenkig verbunden ist und am anderen Ende mittels eines Steuerhebels (39) mit einem entsprechenden Tragschuh (43) gelenkig verbunden ist, wobei der Arbeitszylinder (16, 17; 27, 28; 45, 52, 61) zwischen beiden Enden gelenkig mit dem Kniehebel (38) verbunden ist.

8. Vorrichtung nach Anspruch 1, 2 oder 3,
**dadurch gekennzeichnet, daß** ein Träger (13; 58) vorhanden ist, der in einem Gehäuse (35) verschiebbar ist, wobei der Träger (13; 58) geeignet ist, einen Zitzenbecher (21) zu tragen.

9. Vorrichtung nach Anspruch 8,
**dadurch gekennzeichnet, daß** ein Arbeitszylinder (16, 17; 27, 28; 45, 52, 61) zwischen dem Stützelement (29) und dem in einem zugehörigen Gehäuse (35) verschiebbaren Träger (13; 58) angeordnet ist.

10. Vorrichtung nach Anspruch 9,
**dadurch gekennzeichnet, daß** ein Gehäuse (35) mit einem Anschlag (49) für den in ihm verschiebbaren Träger (13; 58) versehen ist, damit nach dem Verschieben des Trägers (13; 58) gegen den Anschlag (49) in die Arbeitslage mit Hilfe eines zugehörigen Arbeitszylinders (16, 17; 27, 28; 45, 52, 61) der entsprechende Zitzenbecher (21) anschließend nach oben bewegt wird.

11. Vorrichtung nach Anspruch 6, 7 oder 10,
**dadurch gekennzeichnet, daß** ein Computer vorhanden ist, um den Arbeitszylinder (16, 17; 27, 28; 45, 52, 61) in der Weise zu steuern, daß bei einer Bewegung des Zylinders in einer Richtung ein Zitzenbecher (21) aus der Ruhelage in die Arbeitslage eingestellt und anschließend nach oben bewegt werden kann, damit ein Zitzenbecher (21) an eine Zitze angeschlossen werden kann, während bei an die entsprechende Zitze angeschlossenem Zitzenbecher (21) eine Bewegung des Zylinders in der anderen Richtung bewirkt, daß der Zitzenbecher (21) von dem Roboterarm (14; 26) gelöst wird.

12. Vorrichtung nach Anspruch 11,
**dadurch gekennzeichnet, daß** nach Einstellen des Melkroboters in die Position, in der ein Zitzenbecher (21) von dem Roboterarm (14; 26) gelöst ist, der Computer dazu ausgelegt ist, den Arbeitszylinder (16, 17; 27, 28; 45, 52, 61) derart zu steuern, daß der entsprechende Tragschuh (43), falls noch nicht in dieser Weise positioniert, in die Position eingestellt wird, die er in der Arbeitslage einnimmt.

13. Vorrichtung nach einem der Ansprüche 1 bis 12,
**dadurch gekennzeichnet, daß** das Gehäuse (35) eines Zitzenbechers (21) mit einem weiteren Arbeitszylinder (16, 17; 27, 28; 45, 52, 61) versehen ist, der geeignet ist, rechnergesteuert und mit Hilfe eines flexiblen Elements (50), wie z. B. einem Seil, einem Kabel oder einer Schnur, einen Zitzenbecher (21), der an eine entsprechende Zitze angeschlossen und von dem Roboterarm (14; 26) gelöst ist, gegen den Roboterarm (14; 26) zurückzuziehen.

14. Vorrichtung nach Anspruch 13,
**dadurch gekennzeichnet, daß** der an einen Zitzenbecher (21) angeschlossene Milchschlauch (56) über und hinter dem weiteren Arbeitszylinder (16, 17; 27, 28; 45, 52, 61) durch das Gehäuse (35) des Zitzenbechers (21) geführt ist.

15. Vorrichtung nach Anspruch 14,
**dadurch gekennzeichnet, daß** Vorrichtungen vorhanden sind, um beim Zurückziehen eines Zitzenbechers (21) gegen den Roboterarm (14; 26) den Milchschlauch (56) in dem betreffenden Gehäuse (35) nach hinten zu bewegen.

16. Vorrichtung nach Anspruch 15,
**dadurch gekennzeichnet, daß** diese Vorrichtungen durch den weiteren Arbeitszylinder (16, 17; 27, 28; 45, 52, 61) gebildet sind.

17. Vorrichtung nach einem der vorhergehenden Ansprüche,
**dadurch gekennzeichnet, daß** an dem Roboterarm (14; 26) ein Detektor (22) angeordnet ist, um die Position der Zitzen eines zu melkenden Tieres zu ermitteln.

18. Vorrichtung nach Anspruch 17,
**dadurch gekennzeichnet, daß** der Detektor (22) an einem Stützelement (29) angeordnet ist, das zumindest die offenen Oberseiten der Zitzenbecher (21) schützt, wenn sich diese an dem Roboterarm (14; 26) in der Ruhelage befinden.

19. Vorrichtung nach Anspruch 17 oder 18,
**dadurch gekennzeichnet, daß** der Detektor (22) zwei Kameras umfaßt, die - wenn auch in unterschiedlichen Winkeln - fest angeordnet sind.

20. Vorrichtung nach Anspruch 17 oder 18,
**dadurch gekennzeichnet, daß** der Detektor (22) eine schwenkbare Kamera umfaßt.

21. Vorrichtung nach Anspruch 17 oder 18,
**dadurch gekennzeichnet, daß** der Detektor (22) mindestens eine Infrarotkamera umfaßt.

22. Verfahren zum automatischen Melken von Tieren, wie z. B. Kühen, das einen Melkroboter mit einem Roboterarm (14; 26) umfaßt, der zum Tragen von Zitzenbechern (21) geeignet ist,
**dadurch gekennzeichnet, daß** ein Zitzenbecher (21) von einer Ruhelage, in der zumindest die offene Oberseite des Zitzenbechers (21) durch ein Roboterarm-Teilstück (19, 20) geschützt ist, in die Arbeitslage eingestellt wird, in der die Oberseite des Zitzenbechers (21) nicht mehr geschützt ist, und anschließend nach oben bewegt wird, um den Zitzenbecher (21) an eine entsprechende Zitze des zu melkenden Tieres anzuschließen.

23. Verfahren nach Anspruch 22,
**dadurch gekennzeichnet, daß** die Aufwärtsbewegung des Zitzenbechers (21) dadurch erfolgt, daß das Gehäuse (35) dieses Zitzenbechers (21) in dem Roboterarm (14; 26) nach oben bewegt wird.

24. Verfahren nach Anspruch 23,
**dadurch gekennzeichnet, daß** nach Anschluß eines Zitzenbechers (21) an die entsprechende Zitze das Gehäuse (35) dieses Zitzenbechers (21) in dem Roboterarm (14; 26) nach unten bewegt wird, wobei der Zitzenbecher (21) mit dem Gehäuse (35) nur durch ein flexibles Element (50), wie z. B. ein Seil, ein Kabel oder eine Schnur, verbunden bleibt.

25. Verfahren nach Anspruch 24,
**dadurch gekennzeichnet, daß** nach der Abwärtsbewegung des Gehäuses (35) des Zitzenbechers (21) in dem Roboterarm (14; 26) der Tragschuh (43) des Zitzenbechers (21) in die Position eingestellt wird, die er in der Arbeitslage einnimmt.

26. Verfahren nach Anspruch 25,
**dadurch gekennzeichnet, daß** der Zitzenbecher (21) in die Ruhelage eingestellt werden kann, wenn der Zitzenbecher (21), nachdem das betreffende Euterviertel nahezu ausgemolken ist, abgenommen und mittels des flexiblen Elements (50) gegen den entsprechenden Tragschuh (43) gezogen worden ist.

## Revendications

1. Appareil pour la traite automatique d'animaux, tels que des vaches, pourvu d'un robot de traite comprenant un bras de robot (14 ; 26) qui est adapté pour supporter des gobelets trayeurs (21) et, dans la position de repos desdits gobelets trayeurs sur le bras de robot (14 ; 26), au moins les côtés supérieurs ouverts des gobelets trayeurs (21) sont protégés par des moyens de protection, lequel bras de robot (14 ; 26) comprend un élément de support (29), qui peut être pivoté et/ou décalé sous le pis d'un animal, **caractérisé en ce que** les gobelets trayeurs (21), chacun dans son propre logement (35), sont disposés de manière mobile dans l'élément de support (29), ledit élément de support (29) constituant les moyens de protection.

2. Appareil selon la revendication 1, **caractérisé en ce que** le logement (35) d'un gobelet trayeur (21) est relié de façon articulée à l'élément de support (29).

3. Appareil selon la revendication 1 ou 2, **caractérisé en ce que** le logement (35) d'un gobelet trayeur (21) est pourvu d'un patin de support (43) pour le gobelet trayeur (21), lequel patin de support (43) est relié de façon articulée audit logement (35).

4. Appareil selon la revendication 3, **caractérisé en ce que** le patin de support (43) est pourvu d'un évidement conique et le gobelet trayeur (21) est pourvu, au niveau de son côté inférieur, d'une protubérance conique correspondante.

5. Appareil selon l'une quelconque des revendications 1 à 4, **caractérisé en ce qu'**un vérin d'actionnement (16, 17 ; 27, 28 ; 45, 52, 61) est disposé entre l'élément de support (29) d'un côté et le logement (35) d'un gobelet trayeur (21) et le patin de support (43) pour le gobelet trayeur (21) de l'autre côté.

6. Appareil selon la revendication 5, **caractérisé en ce que** le logement (35) d'un gobelet trayeur (21) est pourvu d'une butée (49) pour un patin de support (43) pour le gobelet trayeur (21), lequel patin de support (43) est disposé dans ce logement (35), tandis qu'un mécanisme d'accouplement (37) est, en outre, prévu pour ajuster le gobelet trayeur (21), au moyen du vérin d'actionnement (16, 17 ; 27, 28 ; 45, 52, 61), de la position hors de fonctionnement dans la position de fonctionnement, dans laquelle le côté supérieur du gobelet trayeur (21) n'est plus protégé, et déplacer par la suite le gobelet trayeur (21) vers le haut.

7. Appareil selon la revendication 6, **caractérisé en ce que** le mécanisme d'accouplement (37) est constitué d'une pièce coudée (38), qui, à une extrémité, est reliée de façon articulée au logement (35) d'un gobelet trayeur (21) et, à l'autre extrémité, est reliée de façon articulée à un patin de support (43) approprié au moyen d'un levier de commande (39), tandis que le vérin d'actionnement (16, 17 ; 27, 28 ; 45, 52, 61) entre les deux extrémités est relié de façon articulée à la pièce coudée (38).

8. Appareil selon la revendication 1, 2 ou 3, **caractérisé en ce qu'**un dispositif de transport (13 ; 58) qui peut être décalé dans un logement (35) est prévu, lequel dispositif de transport (13 ; 58) est adapté pour transporter un gobelet trayeur (21).

9. Appareil selon la revendication 8, **caractérisé en ce qu'**un vérin d'actionnement (16, 17 ; 27, 28 ; 45, 52, 61) est disposé entre l'élément de support (29) et le dispositif de transport (13 ; 58) qui peut être décalé dans un logement (35) approprié.

10. Appareil selon la revendication 9, **caractérisé en ce qu'**un logement (35) est pourvu d'une butée (49) pour le dispositif de transport (13 ; 58) qui peut être décalé dans celui-ci afin que, lorsque le dispositif de transport (13 ; 58) a été décalé contre ladite butée (49) dans la position de fonctionnement au moyen d'un vérin d'actionnement (16, 17 ; 27, 28 ; 45, 52, 61) approprié, le gobelet trayeur (21) approprié soit déplacé vers le haut par la suite.

11. Appareil selon la revendication 6, 7 ou 10, **caractérisé en ce qu'**un ordinateur est prévu pour commander le vérin d'actionnement (16, 17 ; 27, 28 ; 45, 52, 61) d'une manière telle que, lors d'un mouvement du vérin dans une direction, un gobelet trayeur (21) peut être ajusté de la position hors fonctionnement dans la position de fonctionnement et être déplacé vers le haut par la suite afin qu'un gobelet trayeur (21) puisse être relié à un trayon, tandis que, lorsque le gobelet trayeur (21) est relié au trayon approprié, un mouvement du vérin dans l'autre direction garantit que le gobelet trayeur (21) est libéré du bras de robot (14 ; 26).

12. Appareil selon la revendication 11, **caractérisé en ce que**, lorsque le robot de traite a été ajusté dans la position dans laquelle un gobelet trayeur (21) a été libéré du bras de robot (14 ; 26), l'ordinateur est capable de commander le vérin d'actionnement (16, 17 ; 27, 28 ; 45, 52, 61) d'une manière telle que le patin de support (43) approprié, s'il n'est pas encore positionné de cette manière, soit ajusté dans la position dans laquelle il adopte la condition de travail.

13. Appareil selon l'une quelconque des revendications 1 à 12, **caractérisé en ce que** le logement (35) d'un gobelet trayeur (21) est pourvu d'un autre vérin d'actionnement (16, 17 ; 27, 28 ; 45, 52, 61) qui, sous la commande de l'ordinateur et au moyen d'un élément flexible (50), tel qu'un cordon, un câble ou une chaîne, est capable de ramener un gobelet trayeur (21), relié à un trayon approprié et libéré du bras de robot (14 ; 26), contre le bras de robot (14 ; 26).

14. Appareil selon la revendication 13, **caractérisé en ce que** le tuyau de lait (56) relié à un gobelet trayeur (21) passe sur l'autre vérin d'actionnement (16, 17 ; 27, 28 ; 45, 52, 61) et derrière celui-ci à travers le logement (35) du gobelet trayeur (21).

15. Appareil selon la revendication 14, **caractérisé en ce que** des moyens sont prévus pour déplacer le tuyau de lait (56) vers l'arrière dans le logement (35) approprié lors du retrait d'un gobelet trayeur (21) contre le bras de robot (14 ; 26).

16. Appareil selon la revendication 15, **caractérisé en ce que** ces moyens sont constitués par l'autre vérin d'actionnement (16, 17 ; 27, 28 ; 45, 52, 61).

17. Appareil selon l'une quelconque des revendications précédentes, **caractérisé en ce qu'**un détecteur (22) est prévu sur le bras de robot (14 ; 26) pour déterminer la position des trayons d'un animal à traire.

18. Appareil selon la revendication 17, **caractérisé en ce que** le détecteur (22) est disposé sur un élément de support (29), lequel protège au moins les côtés supérieurs ouverts des gobelets trayeurs (21) lorsque ces derniers sont dans la position de repos sur le bras de robot (14 ; 26).

19. Appareil selon la revendication 17 ou 18, **caractérisé en ce que** le détecteur (22) comprend deux caméras, qui sont agencées fixement, bien qu'à des angles différents.

20. Appareil selon la revendication 17 ou 18, **caractérisé en ce que** le détecteur (22) comprend une caméra pivotante.

21. Appareil selon la revendication 17 ou 18, **caractérisé en ce que** le détecteur (22) comprend au moins une caméra infrarouge.

22. Procédé de traite automatique d'animaux, tels que des vaches, pourvu d'un robot de traite comprenant un bras de robot (14 ; 26) qui est adapté pour supporter des gobelets trayeurs (21), **caractérisé en ce qu'**un gobelet trayeur (21) est ajusté d'une position hors fonctionnement, dans laquelle au moins le côté supérieur ouvert du gobelet trayeur (21) est protégé par une partie de bras de robot (19, 20), dans la position de fonctionnement, dans laquelle le côté supérieur du gobelet trayeur (21) n'est plus protégé, et est déplacé vers le haut par la suite dans le but de relier le gobelet trayeur (21) à un trayon approprié de l'animal à traire.

23. Procédé selon la revendication 22, **caractérisé en ce que** le mouvement vers le haut du gobelet trayeur (21) est réalisé en déplaçant le logement (35) de ce gobelet trayeur (21) vers le haut dans le bras de robot (14 ; 26).

24. Procédé selon la revendication 23, **caractérisé en ce que**, dès qu'un gobelet trayeur (21) est relié au trayon approprié, le logement (35) de ce gobelet trayeur (21) est déplacé vers le bas dans le bras de robot (14 ; 26), tandis que le gobelet trayeur (21) reste relié audit logement (35) uniquement par un élément flexible (50), tel qu'un cordon, un câble ou une chaîne.

25. Procédé selon la revendication 24, **caractérisé en ce que**, lorsque le logement (35) du gobelet trayeur (21) a été déplacé vers le bas dans le bras de robot (14 ; 26), le patin de support (43) du gobelet trayeur (21) est ajusté dans la position dans laquelle il adopte la condition de travail.

26. Procédé selon la revendication 25, **caractérisé en ce que**, lorsque, après que le quartier de pis approprié ait été pratiquement trait, le gobelet trayeur (21) a été détaché et a été tiré contre le patin de support (43) approprié au moyen de l'élément flexible (50), le gobelet trayeur (21) peut être ajusté dans la position hors fonctionnement.
